# EUROPÄISCHE PATENTSCHRIFT

(11) **EP 0 760 317 B1**
(45) Veröffentlichungstag und Bekanntmachung des Hinweises auf die Patenterteilung: **22.03.2000**
(21) Anmeldenummer: 96112517.6
(22) Anmeldetag: 02.08.1996
(51) Int. Cl.: B60R 22/28

(54) **Kraftbegrenzer an einem Gurtaufroller für Sicherheitsgurte**
Force limiting device on a seat-belt retractor
Limiteur de force sur rétracteur de ceinture de sécurité

(30) Priorität: 30.08.1995 DE 29513942 U
(43) Veröffentlichungstag der Anmeldung: 05.03.1997
(73) Patentinhaber: TRW Occupant Restraint Systems GmbH & Co. KG, 73551 Alfdorf (DE)
(72) Erfinder: Böhmler, Klaus, 73525 Schwäbisch Gmünd (DE)
(74) Vertreter: Degwert, Hartmut, Dipl.-Phys.

(56) Entgegenhaltungen:
- WO-A-96/05988
- FR-A- 2 190 016
- FR-A- 2 242 998
- FR-A- 2 258 199
- FR-A- 2 273 693

## Beschreibung

Die Erfindung betrifft einen Kraftbegrenzer an einem Gurtaufroller für Sicherheitsgurte, mit einer hohlen Gurtspule, auf der das Gurtband aufgewickelt wird, zwei durch eine die Gurtspule koaxial durchsetzende Welle verbundenen Sperrzahnrädern, einer in der hohlen Gurtspule koaxial aufgenommenen Schraubmutter und wenigstens einem die Welle umgebenden, unter Last verformbaren Hohlkörper. Ein derartiger Kraftbegrenzer ist in der gattungsbildenden FR 2 273 693 A1 gezeigt.

Aus der DE 42 27 781 A1 ist ein Kraftbegrenzer bekannt, der durch einen koaxial im Inneren der hohlen Gurtspule aufgenommenen Torsionsstab gebildet ist. Das eine Ende des Torsionsstabs ist drehfest an der Gurtspule angeschlossen, während das andere Ende bei fahrzeug- oder gurtbandsensitiver Sperrung des Gurtaufrollers an dessen lasttragendem Gehäuse blockiert wird. Die Gurtspule kann dann nur gegen den Widerstand des sich durch Torsion plastisch verformenden Torsionsstabs gedreht werden. Ein solcher Kraftbegrenzer kann die im Gurtband auftretenden hohen Lastspitzen zuverlässig abbauen.

Durch die Erfindung wird ein Kraftbegrenzer an einem Gurtaufroller für Sicherheitsgurte zur Verfügung gestellt, der mit einfachen Mitteln eine gezielte Beeinflussung der Kraftbegrenzungskennlinie ermöglicht, welche die Gurtkraft in Abhängigkeit vom Drehwinkel der Gurtspule bzw. von der abgezogenen Gurtbandlänge angibt. Gemäß der Erfindung ist die Schraubmutter drehfest an die Gurtspule angeschlossen und steht mit einem Außengewinde der Welle in Eingriff. Der verformbare Rohrkörper ist axial zwischen der Schraubmutter und einem an der Welle axial abgestützten Deformierungskörper angeordnet, wobei der Deformierungskörper durch am Umfang der Welle angebrachte, zerspanende Schneidkörper gebildet ist. Wenn die Sperrzahnräder durch den herkömmlichen Sperrmechanismus blockiert sind und über das Gurtband eine hohe Last auf die Gurtspule aufgebracht wird, verdreht diese sich auf der Welle und nimmt dabei die Schraubmutter mit. Die Schraubmutter verlagert sich nun in Axialrichtung auf der Welle, wobei sie den Rohrkörper gegen die Schneidkörper drückt, so daß diese den Rohrkörper verformen. Die im Gurtband auftretende Kraft wird durch Energiewandlung begrenzt. Durch einen veränderlichen Querschnitt des Rohrkörpers kann die Kennlinie beeinflußt werden, welche die Gurtbandkraft in Abhängigkeit von der Wegstrecke angibt. Durch eine variable Wandstärke des Rohrkörpers kann somit der Kraftbegrenzer an die Forderungen der verwendeten Rückhaltesysteme und die Verhältnisse im Fahrzeug optimal angepaßt werden.

Ein weiterer Vorteil des erfindungsgemäßen Kraftbegrenzers besteht darin, daß ein herkömmlicher Sperrmechanismus verwendet werden kann, da die Sperrung in üblicher Weise an zwei Sperrzahnrädern erfolgen kann, die zugleich die Flansche der Gurtspule bilden.

Weitere Einzelheiten der Erfindung ergeben sich aus der folgenden Beschreibung und aus der Zeichnung, auf die Bezug genommen wird. In der Zeichnung zeigen:
- Fig. 1 einen schematischen Schnitt eines Kraftbegrenzers;
- Fig. 2 eine schematische Schnittansicht entlang Linie II-II in Fig. 1;
- Fig. 3 einen Rohrkörper mit über seine Länge variabler Wandstärke; und
- Fig. 4 eine schematische Darstellung einer Ausführungsform eines erfindungsgemäßen Kraftbegrenzers, bei dem ein Rohrkörper spanend verformt wird.

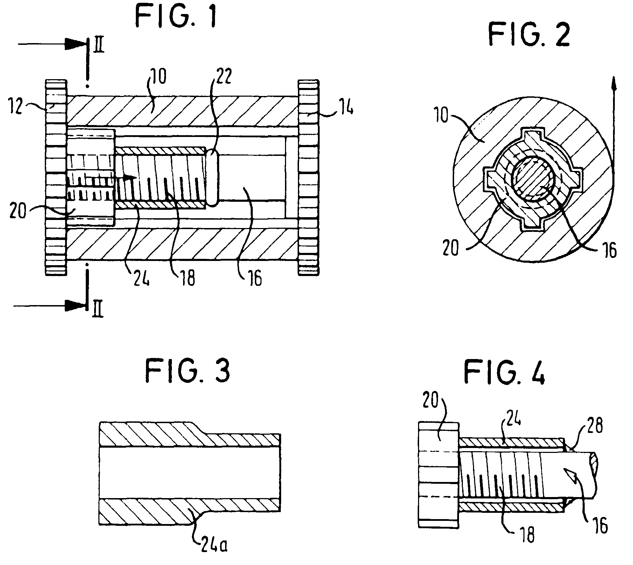

Bei dem in Fig. 1 gezeigten Kraftbegrenzer, der nicht Gegenstand der Erfindung ist, sind zwei Flansche einer Gurtspule 10 bildende Sperrzahnräder 12, 14 durch eine Welle 16 starr miteinander verbunden. Die Welle 16 weist an einem ihrer Enden ein Außengewinde 18 auf, mit dem eine Schraubmutter 20 in Eingriff steht. Wie aus Fig. 2 ersichtlich ist, steht die Schraubmutter 20 durch Formschluß in drehfester Verbindung mit der Gurtspule 10. Auf der Welle 16 ist ferner ein Ringbund 22 fest angebracht. Dieser Ringbund 22 bildet einen Deformierungskörper für einen zwischen ihm und der Schraubmutter 20 angeordneten, die Welle koaxial umgebenden Rohrkörper 24.

Bei fahrzeug- und gurtbandsensitiver Sperrung der Sperrzahnräder 12, 14 ist die Gurtspule 10 nur bis zu einer vorbestimmten Last ebenfalls drehfest blockiert, da die Schraubmutter 20 über den Rohrkörper 24 am Ringbund 22 der Welle 16 abgestützt ist. Wenn jedoch die Gurtkraft weiter anwächst, beginnt der Ringbund 22, das benachbarte Ende des Rohrkörpers 24 aufzuweiten und in diesen einzudringen. Die Schraubmutter 20 schiebt nun, wie in Fig. 1 durch einen Pfeil angedeutet, den Rohrkörper 24 progressiv in Axialrichtung gegen den Ringbund 22, der dabei den Rohrkörper 24 zunehmend verformt. Durch diese plastische Verformung werden die im Gurt auftretenden Lastspitzen abgebaut. Die Kraft wird auf ein Niveau begrenzt, das insbesondere auch durch die Wandstärke des Rohrkörpers 24 bestimmt ist. Bei Verwendung des in Fig. 3 gezeigten Rohrkörpers 24a, dessen Wandstärke stufenweise variiert, wird eine die Gurtkraft über dem Weg angebende Kennlinie mit einer entsprechenden Stufe erzielt.

Statt einer plastischen Verformung erfolgt bei dem erfindungsgemäßen Kraftbegrenzer gemäß Fig. 4 eine spanende Verformung des Rohrkörpers 24. Anstelle des Ringbunds 22 trägt hier die Welle 16 eine Reihe von Schneidkörpern 28, die bei ausreichend hoher Axiallast den Rohrkörper 24 spanend verformen.

## Patentansprüche

1. Kraftbegrenzer an einem Gurtaufroller für Sicherheitsgurte, mit einer hohlen Gurtspule (10), auf der das Gurtband aufgewickelt wird, zwei durch eine die Gurtspule koaxial durchsetzende Welle (16) verbundenen Sperrzahnrädern (12, 14), einer in der hohlen Gurtspule (10) koaxial aufgenommenen Schraubmutter (20) und wenigstens einem die Welle (16) umgebenden, unter Last verformbaren Rohrkörper (24), dadurch gekennzeichnet, daß die Schraubmutter (20) drehfest an die Gurtspule (10) angeschlossen ist und mit einem Außengewinde (18) der Welle (16) in Eingriff steht, und daß der verformbare Rohrkörper (24) axial zwischen der Schraubmutter (20) und einem an der Welle (16) axial abgestützten Deformierungskörper (22) angeordnet ist, wobei der Deformierungskörper (22) durch am Umfang der Welle (16) angebrachte, zerspanende Schneidkörper (28) gebildet ist.

2. Kraftbegrenzer nach Anspruch 1, dadurch gekennzeichnet, daß der Rohrkörper (24a) über seine axiale Länge eine veränderliche Wandstärke aufweist.

## Claims

1. A force limiting device on a belt retractor for safety belts, comprising a hollow belt reel (10) on which the belt webbing is wound, two ratchet wheels (12, 14) connected by a shaft (16) which passes coaxially through the belt reel, a threaded nut (20) coaxially accommodated in the hollow belt reel (10) and at least one tubular body (24) which surrounds the shaft (16) and is deformable under load, characterized in that the threaded nut (20) is connected to the belt reel (10) for joint rotation and engages with an external thread (18) of the shaft (16), and that the deformable tubular body (24) is arranged axially between the threaded nut (20) and a deformation element (22) supported axially on the shaft (16), the deformation element (22) being formed by cutting bodies (28) fitted around the circumference of the shaft (16).

2. The force limiting device according to claim 1, characterized in that the tubular body (24a) has a variable wall thickness over its axial length.

## Revendications

1. Limiteur de forces sur un enrouleur de ceinture pour des ceintures de sécurité, avec une bobine creuse de ceinture (10), sur laquelle s'enroule la sangle de la ceinture, avec deux roues dentées de blocage (12, 14) reliées par un axe (16) traversant coaxialement la bobine de la ceinture, avec un écrou (20) logé coaxialement dans la bobine creuse (10) de la ceinture et au moins un corps tubulaire (24), entourant l'axe (16), corps qui peut se déformer en charge, caractérisé en ce que l'écrou (20) est raccordé de façon solidaire en rotation à la bobine (10) de la ceinture et se trouve en prise avec un filetage extérieur (18) de l'axe (16), et en ce que le corps tubulaire (24) déformable est disposé axialement entre l'écrou (20) et un corps de déformation (22) qui prend appui axialement sur l'axe (16), le corps de déformation (22) étant constitué par un corps autotaraudeur (28), coupant, disposé sur le pourtour de l'axe (16).

2. Limiteur de forces selon la revendication 1, caractérisé en ce que le corps tubulaire (24a) présente sur sa longueur axiale une épaisseur de paroi variable.
